# EUROPÄISCHE PATENTANMELDUNG

(11) **EP 1 143 163 A2**
(43) Veröffentlichungstag der Anmeldung: **10.10.2001**
(21) Anmeldenummer: 01108266.6
(22) Anmeldetag: 02.04.2001
(51) Int. Cl.: F16D 55/226

(54) **Schwimmsattel-Scheibenbremse für ein Kraftfahrzeug**

(30) Priorität: 04.04.2000 DE 10016362; 22.02.2001 DE 10108521
(71) Anmelder: Continental Teves AG & Co. oHG, 60488 Frankfurt (DE)
(72) Erfinder: Weiler, Rolf, 65817 Eppstein (DE); Kirschner, Thomas, 60596 Frankfurt am Main (DE)

(57) **Zusammenfassung**

Die Erfindung betrifft eine Schwimmsattel-Scheibenbremse für ein Kraftfahrzeug sowie einen zugehörigen Halter (1) der Schwimmsattel-Scheibenbremse. Der Schwimmsattel (2) einer derartigen Scheibenbremse ist verschiebbar am fahrzeugfesten Halter (1) angeordnet. Zugehörige Bremsbeläge (3, 4) sind am Halter (1) verschiebbar geführt und gleichzeitig zur Übertragung der Bremsumfangskräfte abgestützt. Derartige Schwimmsattel-Scheibenbremsen erfordern je nach den vorliegenden Rahmenbedingen eine spezifische Abstimmung sowie Gestaltung des Schwimmsattels (2) und des zugehörigen Halters (1). Zur Vereinheitlichung des Designs unterschiedlicher Schwimmsättel und damit Reduzierung des Variantenvielfalt ist am Schwimmsattel (2) ein in Umfangsrichtung sich erstreckender Vorsprung (19) ausgebildet ist, der sich in eine zugehörige Ausnehmung (20) im Halterarm (9) erstreckt. Dies erlaubt grundsätzlich die Kombination des vereinheitlichten Schwimmsattels (2) mit mehreren unterschiedlichen Halterbauformen.

## Beschreibung

Die vorliegende Erfindung betrifft eine Schwimmsattel-Scheibenbremse für ein Kraftfahrzeug sowie einen zugehörigen Halter der Schwimmsattel-Scheibenbremse. Der Schwimmsattel einer derartigen Scheibenbremse ist verschiebbar am fahrzeugfesten Halter angeordnet. Zugehörige Bremsbeläge sind am Halter verschiebbar geführt und gleichzeitig zur Übertragung der Bremsumfangskräfte abgestützt.

Aus der EP 0 341 610 B1 ist eine Teilbelag-Scheibenbremse bekannt, bei der ein Schwimmsattel verschiebbar an einem fahrzeugfest verschraubten Halter angeordnet ist. Dabei sind die vom Schwimmsattel übergriffenen Bremsbeläge am Halter verschiebbar geführt sowie in Umfangsrichtung abgestützt. Ferner wird in der DE 44 30 459 A1 eine Schwimmsattel-Scheibenbremse für Kraftfahrzeuge beschrieben, bei der der Schwimmsattel an einem in den Achsschenkel integrierten Halter verschiebbar gelagert ist. In diesem Fall liegt der Halter nicht als separates Bauteil vor sondern ist vielmehr einstückig mit dem Achsschenkel ausgeführt. Für die beiden genannten Halterausführungen sind jeweils geeignet gestaltete Schwimmsättel erforderlich, die an das jeweilige Halterdesign angepaßt sind. Dies erfordert insbesondere bei mehreren Baureihen von Schwimmsattel-Scheibenbremsen eine entsprechende Vielfalt von unterschiedlichen Schwimmsatteltypen. Dadurch wird grundsätzlich eine Vereinheitlichung von Einzelkomponenten der Scheibenbremse für unterschiedliche Ausführungsformen zur Realisierung einer Fertigungs- und Montagevereinfachung erschwert.

Davon ausgehend besteht die Aufgabe der Erfindung darin, eine Schwimmsattel-Scheibenbremse für Kraftfahrzeuge anzugeben, die die genannten Nachteile überwindet und somit möglichst vielseitig einsetzbar ist.

Gelöst wird die Aufgabe durch eine Schwimmsattel-Scheibenbremse für ein Kraftfahrzeug nach den Merkmalen des Patentanspruches 1. Danach umfaßt die Schwimmsattel-Scheibenbremse einen fahrzeugfesten Halter, der mit zwei Haltearmen den Rand einer Bremsscheibe axial übergreift, sowie einen verschiebbar am Halter angeordneten Schwimmsattel, der eine Bremsscheibe sowie beiderseits der Bremsscheibe angeordnete Bremsbeläge umgreift, wobei die Bremsbeläge an den Halterarmen verschiebbar geführt und in Umfangsrichtung der Bremsscheibe abgestützt sind. Erfindungsgemäß ist am Schwimmsattel ein in Umfangsrichtung sich erstreckender Vorsprung ausgebildet, der sich in eine zugehörige Ausnehmung im Halterarm erstreckt. Der Vorsprung ragt insbesondere berührungsfrei in die entsprechende Ausnehmung im Halterarm hinein, um die Relativbewegung des Schwimmsattels gegenüber dem Halter nicht zu beeinträchtigen. Dies ermöglicht eine einheitliche Gestaltung des Schwimmsattels, der ohne weitere Veränderung in Verbindung mit verschiedenen Halterbauformen verwendet werden kann. Insbesondere bei bestimmten Bauformen der Schwimmsattel-Scheibenbremse, vor allem mit einem in den Achsschenkel integrierten Halter, hintergreift der Vorsprung einen Abschnitt des Halterarmes und verhindert somit ein radiales Ausheben des Schwimmsattels.

Eine vorteilhafte Weiterbildung der Schwimmsattel-Scheibenbremse wird dadurch erreicht, daß der Vorsprung in Hauptdrehrichtung der Bremsscheibe einlaufseitig am Schwimmsattel ausgebildet ist, da dort die Neigung des Schwimmsattels gegen radiales Ausheben am größten ist. Dabei ist der Vorsprung insbesondere unmittelbar beim Gießen des Schwimmsattels an diesen angeformt.

Eine nur wenig Bauraum beanspruchende Ausführung der Schwimmsattel-Scheibenbremse ergibt sich dadurch, daß die Bremsbeläge radial innerhalb des Bremsscheibendurchmessers an den Halterarmen verschiebbar geführt und in Umfangsrichtung der Bremsscheibe abgestützt sind.

Zur weiteren Verbesserung der verschiebbaren Lagerung des Schwimmsattels am fahrzeugfesten Halter ist es zu empfehlen, den Schwimmsattel am axial außenliegenden Bremsbelag radial abzustützen. Dazu weist der äußere Bremsbelag vorzugsweise eine radiale Erhebung auf, auf der der Schwimmsattel radial aufliegt. Weiterhin kann es sinnvoll sein, im Schwimmsattel eine entsprechende Vertiefung auszubilden, in die sich die Erhebung auf dem Bremsbelag hineinerstreckt.

Außerdem wird um Schutz ersucht für einen entsprechend gestalteten Halter einer Schwimmsattel-Scheibenbremse mit zwei senkrecht zu einem Basisabschnitt sich erstreckenden Halterarmen, die voneinander beabstandet sind und an denen jeweils eine Führungsnut zur Führung und Abstützung von Bremsbelägen ausgebildet ist. An zumindest einem der Halterarme ist eine Ausnehmung vorgesehen, die in eine Wand der Führungsnut eingeformt ist und in die sich fertig montierten Zustand der Scheibenbremse der Vorsprung am Schwimmsattel hineinerstreckt.

Eine vorteilhafte Ausführung der Schwimmsattel-Scheibenbremse wird anhand der Figuren dargestellt und im folgenden näher erläutert.

Es zeigt:
- Fig.1: eine räumliche Darstellung einer erfindungsgemäßen Schwimmsattel-Scheibenbremse mit einem separaten Halter;
- Fig.2: eine räumliche Darstellung des Halters aus Fig. 1 mit Bremsbelägen;
- Fig.3: einen Halter nach den Fig. 1-2 in räumlicher Ansicht;
- Fig.4: eine räumliche Darstellung eines Schwimmsattels nach Fig. 1 in Verbindung mit einem in einen Achsschenkel integrierten Halter.

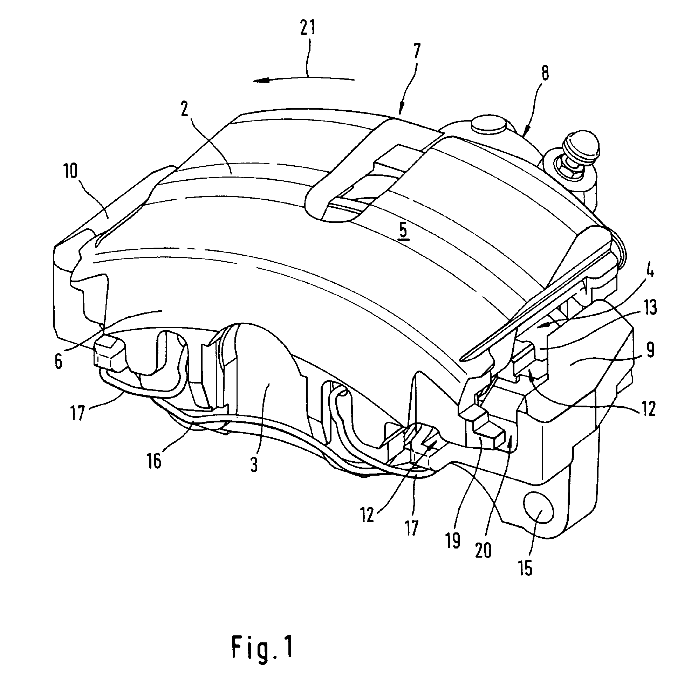

Die in den Figuren 1-3 dargestellte Schwimmsattel-Scheibenbremse umfaßt im wesentlichen einen fahrzeugfesten Halter 1 sowie einen verschiebbar dazu angeordneten Schwimmsattel 2 mit Bremsbelägen 3, 4. Der Schwimmsattel 2 ist üblicherweise über Bolzenführungen oder entsprechend wirkende Führungssysteme in Betätigungsrichtung der Scheibenbremse verschiebbar am Halter 1 angeordnete. Der Schwimmsattel 2 übergreift mit einem Brückenabschnitt 5 in bekannter Art und Weise den Rand einer nicht gezeigten Bremsscheibe sowie die beiderseits der Bremsscheibe angeordneten Bremsbeläge 3, 4. Auf jeder Bremsscheibenseite geht der Brückenabschnitt 5 jeweils in einen Sattelschenkel 6, 7 über. Der fahrzeugbezogen axial innenliegende Sattelschenkel 7 beinhaltet zumindest eine Betätigungsvorrichtung 8, den zugehörigen innenliegenden Bremsbelag 4 bei Bremsbetätigung direkt gegen die Bremsscheibe drücken zu können. Als Folge einer Bremsbetätigung und der daraus resultierenden Reaktionskraft wird der außenliegende Bremsbelag 3 durch Axialverschiebung des Schwimmsattels 2 indirekt in Anlage mit der Bremsscheibe gebracht. Dabei sind die Bremsbeläge 3, 4 an die Bremsscheibe überragenden Halterarmen 9, 10 axial verschiebbar geführt sowie in Umfangsrichtung der Bremsscheibe abgestützt. Dazu sind an den Halterarmen 9, 10 Führungsnuten 11, 12 ausgebildet, in die L-förmige seitliche Ansätze 13 der Bremsbeläge 3, 4 jeweils hineingreifen. Die Führungsnuten 11, 12, sind ebenso wie die L-förmigen Ansätze 13 im fertig montierten Zustand der Schwimmsattel-Scheibenbremse vorzugsweise innerhalb des Bremsscheibendurchmessers angeordnet. Über die L-förmigen Ansätze 13 können somit die bei Bremsbetätigung auftretenden Bremsumfangskräfte über die Halterarme 9, 10 abgeführt werden. Es ergeben sich Komfortvorteile, wenn die Bremsumfangskräfte bezogen auf die Drehung der Bremsscheibe zunächst nur am einlaufseitigen Halterarm 9, 10 abgestützt werden, so daß sich zumindest bei geringeren Bremsumfangskräften gezogen abgestützte Bremsbeläge 2, 3 ergeben. Erst bei großen Bremsumfangskräften sind durch elastische Verformung des einlaufseitigen Halterarmes die Bremsbeläge in beiden Halterarmen 9, 10 abgestützt, so daß sich gleichzeitig gezogen und gedrückt abgestützte Bremsbeläge 3, 4 ergeben. Dabei ist der Halter 1 allgemein als separates Bauteil über seinen Basisabschnitt 14 mit Befestigungsöffnungen 15 fahrzeugfest verschraubt.

Zur radial klapperfreien Verspannung des Schwimmsattels 2 am Halter 1 ist am axial äußeren Sattelschenkel 6 eine Gehäusehaltefeder 16 angeordnet. Die Gehäusehaltefeder 16 ist vorzugsweise am äußeren Sattelschenkel 6, beispielsweise in Bohrungen, eingehakt und liegt mit seitlich sich erstreckenden Federbügeln 17 auf der Unterseite der Halterarme 9, 10 unter Federvorspannung an. Dadurch wird der Schwimmsattel 2 zusammen mit den Bremsbelägen 3, 4 radial gegen den Halter 1 gedrückt. Zur radial definierten Auflage des Schwimmsattel 2 ist dieser an einer Erhebung 18 des axial äußeren Bremsbelages 3 radial abgestützt. Dazu ist an der der Bremsscheibe zugewandten Innenseite des Brückenabschnittes 5 eine entsprechende Vertiefung eingeformt, in die die Erhebung 18 hineinragt.

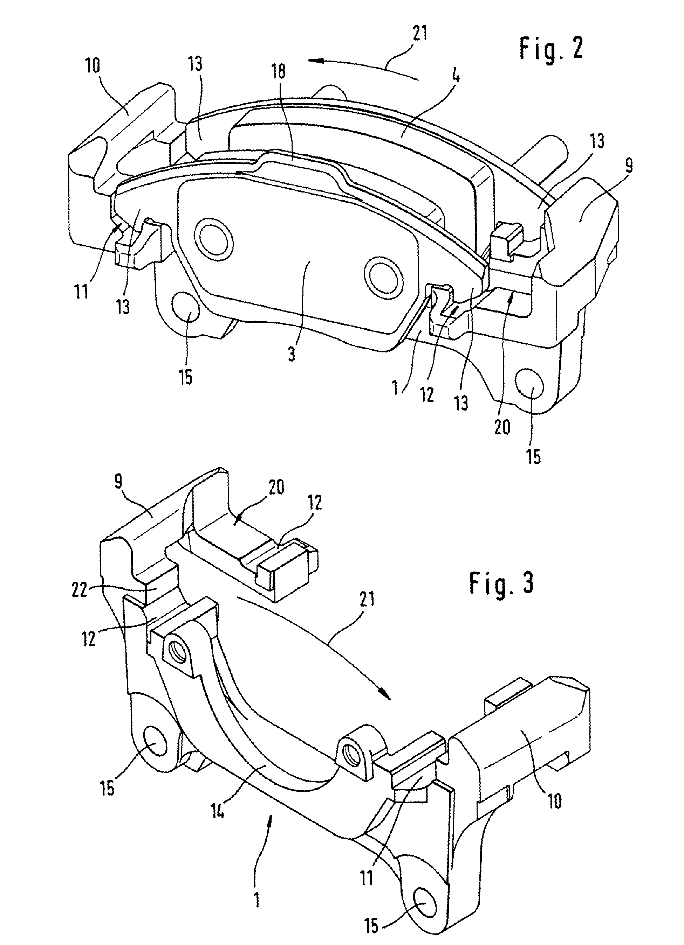

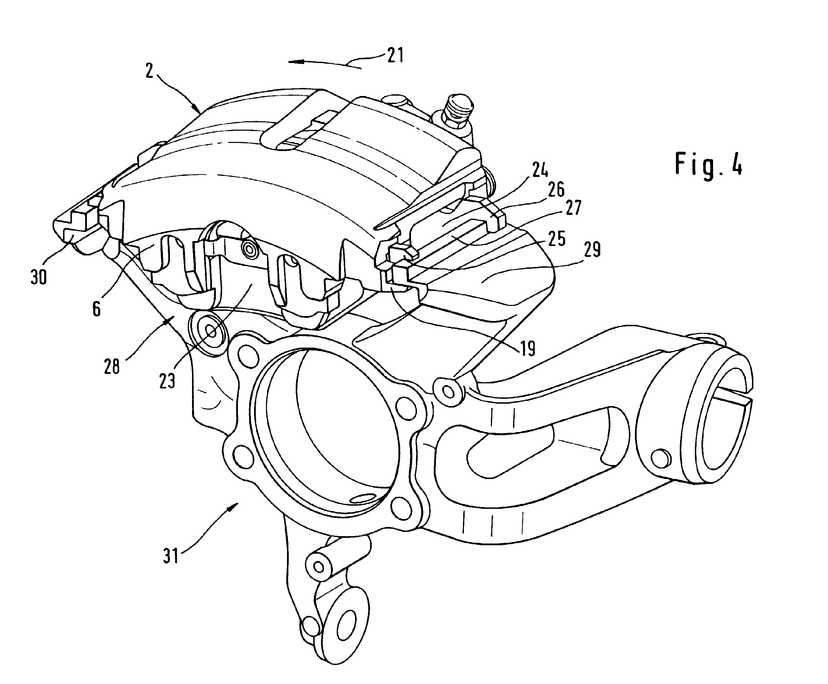

An seinem axial außenliegenden Sattelschenkel 6 weist der Schwimmsattel 2 ferner einen in Umfangsrichtung sich erstrekkenden Vorsprung 19 auf. Ein derartiger Vorsprung 19 dient bei Schwimmsattel-Scheibenbremsen mit integriertem Halter (siehe Fig. 4) als radiale Aushebesicherung, da er sich bei derartigen Anordnungen radial unterhalb des entsprechenden Halterarmes 29 erstreckt. Dadurch wird vermieden, daß sich der Schwimmsattel 2 als Folge auftretender Bremskräfte vom Halter bzw. seinen Halterarmen 29, 30 radial abhebt. Bei der Anordnung der Schwimmsattel-Scheibenbremse nach Figur 1 mit einem separaten Halter 1 wird das radiale Ausheben des Schwimmsattels 2 durch die radial wirksame Gehäusehaltefeder 16 verhindert. Der Vorsprung 19 erstreckt sich dort in eine zugehörige Ausnehmung 20 im Halterarm 9. Insbesondere ragt der Vorsprung 19 berührungsfrei in die Ausnehmung 20 hinein, um bei einer Bremsbetätigung die Axialverschiebung des Schwimmsattels 2 gegenüber dem Halter nicht zu beeinträchtigen. Dabei ist es vorteilhaft den Vorsprung 19 bzw. die Ausnehmung 20 bezogen auf die Hauptdrehrichtung 21 der Bremsscheibe, d. h. bei Vorwärtsfahrt des Kraftfahrzeuges, einlaufseitig anzuordnen, da bei bestimmten Bauformen die Aushebekräfte dort am größten sind. Entsprechend ist die Ausnehmung 20 bezogen auf die Hauptdrehrichtung 21 der Bremsscheibe am einlaufseitigen Halterarm 9 ausgebildet. Wie insbesondere Figur 3 zu entnehmen ist, ist die Ausnehmung in eine Wand 22 der einlaufseitigen Führungsnut 12 eingeformt. Dadurch geht für den axial äußeren Bremsbelag 3 eine Abstützfläche verloren, so daß die am äußeren Bremsbelag anliegenden Bremsumfangskräfte bei Bremsscheibenrotation entgegen der Hauptdrehrichtung 21, d. h. bei Rückwärtsfahrt, ausschließlich gezogen am Halterarm 10 abgestützt werden können.

Die besondere Gestaltung des Schwimmsattels 2 mit Vorsprung 19 sowie des zugehörigen separaten Halters 1 erlaubt eine einheitliche Ausführung des Schwimmsattels 2, der demzufolge in Verbindung mit unterschiedlichen Halterausführungen funktionssicher verwendet werden kann. Insbesondere kann ein derartiger Schwimmsattel 2 sowohl auf einem separaten Halter 2 als auch auf einem integrierten Halter 28 montiert werden. Gegebenenfalls kann er dazu mit jeweils geeigneten Bremsbelagsätzen ausgestattet werden. Dadurch kann die Variantenvielfalt der unterschiedlichen Schwimmsättel reduziert werden, was die Fertigung vereinfacht.

Figur 4 zeigt die Kombination eines bereits beschriebenen, vereinheitlichten Schwimmsattels 2 mit einem in einen Achsschenkel 31 eines Kraftfahrzeuges integrierten Halters 28. Der Vorsprung 19 ragt dort unter den in Hauptdrehrichtung 21 der Bremsscheibe einlaufseitigen Halterarm 29. Er dient damit als radiale Aushebesicherung. Eine Gehäusehaltefeder kann vorteilhaft entfallen. Die Bremsbeläge 23, 24 sind an die Gestaltung der integrierten Halterarme 29, 30 angepaßt und sind entsprechend mit seitlichen Ansätzen 25, 26 an Führungsabschnitten 27 der Halterarme 29, 30 verschiebbar geführt sowie in Umfangsrichtung abgestützt. Im Unterschied zur Ausführung nach Fig. 1 mit separatem Halter 1 sind die Führungsabschnitte 27 an den integrierten Halterarmen 29, 30 sowie die seitlichen Bremsbelagansätze 25, 26 im montierten Zustand der Scheibenbremse vorzugsweise radial außerhalb des Bremsscheibendurchmessers angeordnet. Dadurch ergeben sich für die Übertragung der auftretenden Bremsumfangskräfte bessere Abstützverhältnisse an den Halterarmen 29, 30. Im einzelnen ist der innenliegende Bremsbelag 24 durch die entsprechende Gestaltung der seitlichen Ansätze 26 unabhängig von der Bremsscheibendrehrichtung vorzugsweise gezogen und gedrückt abgestützt, während der außenliegende Bremsbelag 23 nur gedrückt abgestützt ist.

## Patentansprüche

1. Schwimmsattel-Scheibenbremse für ein Kraftfahrzeug mit einem fahrzeugfesten Halter (1), der mit zwei Haltearmen (9, 10, 29, 30) den Rand einer Bremsscheibe axial übergreift, mit einem verschiebbar am Halter (1) angeordneten Schwimmsattel (2), der eine Bremsscheibe sowie beiderseits der Bremsscheibe angeordnete Bremsbeläge (3, 4, 23, 24) umgreift, wobei die Bremsbeläge (3, 4, 23, 24) an den Halterarmen (9, 10, 29, 30) verschiebbar geführt und in Umfangsrichtung der Bremsscheibe abgestützt sind, **dadurch gekennzeichnet, daß** am Schwimmsattel (2) ein in Umfangsrichtung sich erstreckender Vorsprung (19) ausgebildet ist, der sich in eine zugehörige Ausnehmung (20) im Halterarm (9) erstreckt.

2. Schwimmsattel-Scheibenbremse nach Anspruch 1, **dadurch gekennzeichnet, daß** der Vorsprung (19) in Hauptdrehrichtung (21) der Bremsscheibe einlaufseitig am Schwimmsattel (2) ausgebildet ist.

3. Schwimmsattel-Scheibenbremse nach einem der vorhergehenden Ansprüche, **dadurch gekennzeichnet, daß** die Bremsbeläge (3, 4) radial innerhalb des Bremsscheibendurchmessers an den Halterarmen (9, 10) verschiebbar geführt und in Umfangsrichtung der Bremsscheibe abgestützt sind.

4. Schwimmsattel-Scheibenbremse nach einem der vorhergehenden Ansprüche, **dadurch gekennzeichnet, daß** der Schwimmsattel (2) am axial außenliegenden Bremsbelag (3) radial abgestützt ist.

5. Halter einer Schwimmsattel-Scheibenbremse für ein Kraftfahrzeug mit zwei senkrecht zu einem Basisabschnitt (14) sich erstreckenden Halterarmen (9, 10), die voneinander beabstandet sind und an denen jeweils eine Führungsnut (11, 12) zur Führung und Abstützung von Bremsbelägen ausgebildet ist, **dadurch gekennzeichnet, daß** an einem Halterarm (9) eine Ausnehmung (20) vorgesehen ist, die in eine Wand (22) der Führungsnut (12) eingeformt ist.
